# EUROPEAN PATENT SPECIFICATION

(11) **EP 0 467 994 B1**
(45) Date of publication and mention of the grant of the patent: **17.07.1996**
(21) Application number: 90908090.5
(22) Date of filing: 06.04.1990
(51) Int. Cl.: H02J 7/10

(54) **A METHOD AND AN APPARATUS FOR CHARGING OF A BATTERY**
VORRICHTUNG UND VERFAHREN ZUM AUFLADEN EINER BATTERIE
PROCEDE ET APPAREIL POUR CHARGER UNE BATTERIE

(30) Priority: 12.04.1989 SE 8901317
(43) Date of publication of application: 29.01.1992
(73) Proprietor: Rydborn, Sten Ake Olaus, S-343 00 Älmhult (SE)
(72) Inventor: Rydborn, Sten Ake Olaus, S-343 00 Älmhult (SE)
(74) Representative: Nilsson, Lennart
(86) International application number: PCT/SE90/00239
(87) International publication number: WO 90/12441

(56) References cited:
- EP-A- 0 005 840
- EP-A- 0 074 444
- EP-A- 0 225 106
- DE-A- 3 440 430
- SE-B- 0 451 924
- US-A- 4 499 424

## Description

The present invention relates to a method in accordance with the preamable of claim 1 and an apparatus for carrying out the method.

A plurality of various types of principles are hitherto known in the art for charging batteries with, for example, NiCd cells. Examples of this are constant current charging, constant voltage charging, pressure and temperature charging and pulse charging. The major advantage inherent in constant current charging is that the charger may be of extremely simple design, while its drawback is a restriction to a temperature range of between 0 and 40°C and an extremely long charging time at low temperatures, since permitted mean current in cold conditions is considerably lower than at room temperature. Furthermore, charging takes place in a completely uncontrolled manner, without any adaptation whatever to the capacity of the cells to accept the charging energy. Constant voltage charging is also uncontrolled, but in this process somewhat better use is made of the properties of the cell, but also in this case charging time will be long, in particular at low temperatures. Because of the difficulties involved in providing pressure or temperature sensing elements, pressure and temperature charging occurs only in extremely special and rare circumstances. The reason for this is that, in this particular case, the practical difficulties are as good as insurmountable. In per se conventional pulse charging, the charging is effected in cycles of, for example, 1 Hz, the charging current being, for instance, twice as large as the discharging current. Pulse charging has proved to be more efficient than many other charging concepts, in particular at low temperatures. In conventional pulse charging, the only compensation made is for poor regulation of the charging current of the battery. However, conventional pulse charging involves considerable charging times and relatively poor control of the various parameters. Previously known methods and apparatuses for charging of a battery are disclosed in DE-A-3440430 and EP-A-0005840. In particular, DE-A-3440430 proposes to apply alternate charging and discharging pulses with possible interpulse periods wherein no battery current flows. Voltage measurements either at the end of the discharging pulses and at the beginning of the charging pulses, or during the interpulse periods are used to determine the battery voltage corresponding to its electromotive force.

The object forming the basis of the present invention is to devise a novel method for controlling charging of a multi-cell battery, for example NiCd cells, which gives a thorough charging of the battery in a considerably shorter time than has hitherto been possible, both at room temperature and in particular at lower temperatures, and also an apparatus for reducing the method into practice.

This object is attained according to the present invention in the method as set forth in one or more of the appended method claims. An apparatus for carrying out the method according to the present invention is defined as set forth in one or more of the appended apparatus claims.

The major advantage inherent in the method and apparatus according to the present invention resides in the possibility for a thorough charging of a battery in a considerably shorter time than has hitherto been possible without any risk whatever of undesirable pressure build-up in the individual cells as a result of gas formation. While a charger according to the present invention may appear to be relatively complicated, its complexity is without any doubt motivated by the extraordinary advantages attained with the charger which gives as good as 50% and more shorter charging times than do prior art chargers, this without any risk whatever of undesirable gas formation in the cells. Moreover, the method according to the present invention takes into account the capacity of the individual cells to accept charging energy, whereby all cells in a battery will be given substantially the same charging level irrespective of whether any of the cells becomes fully charged before any of the others.

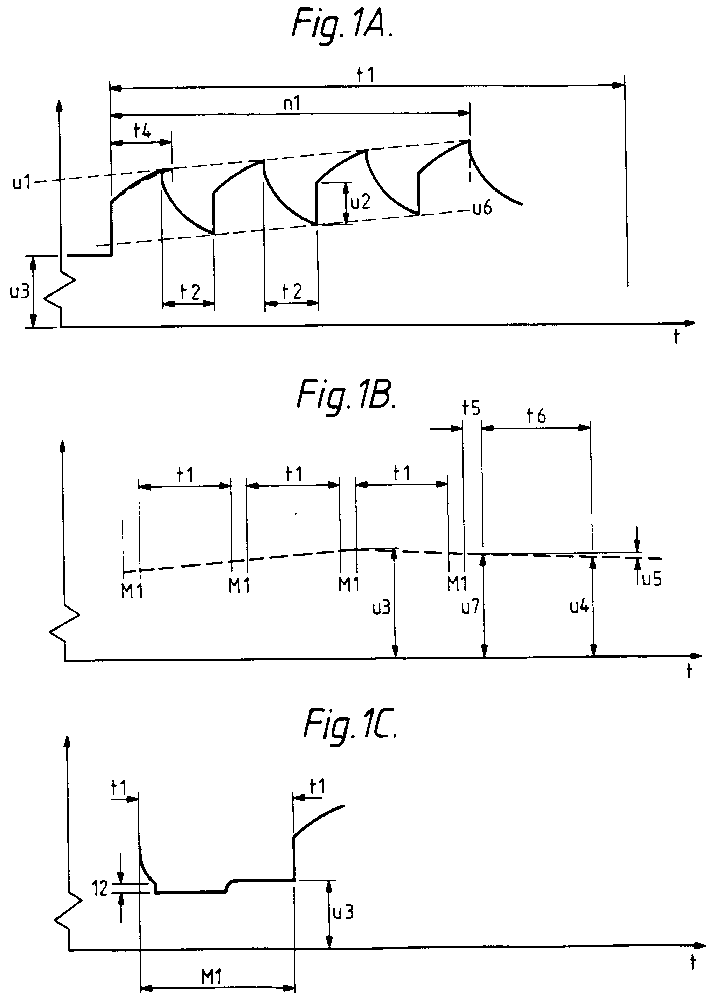

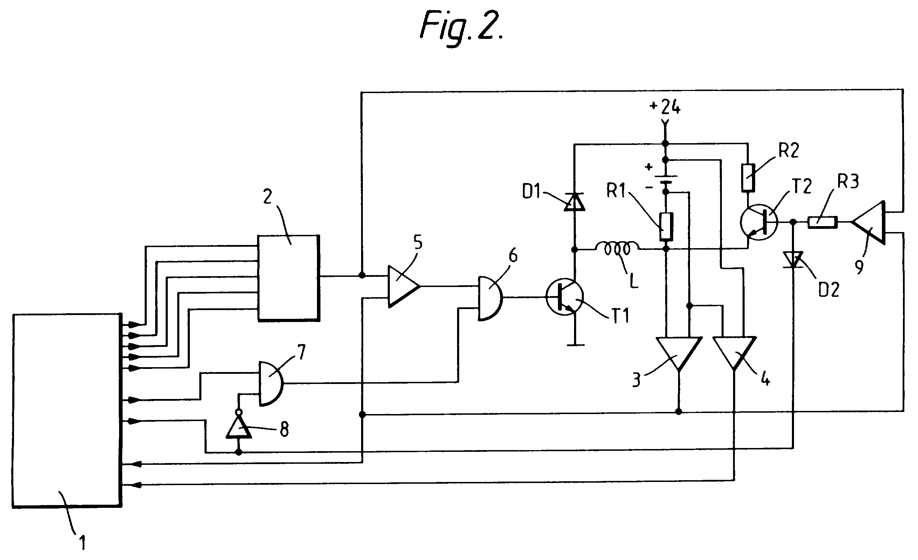

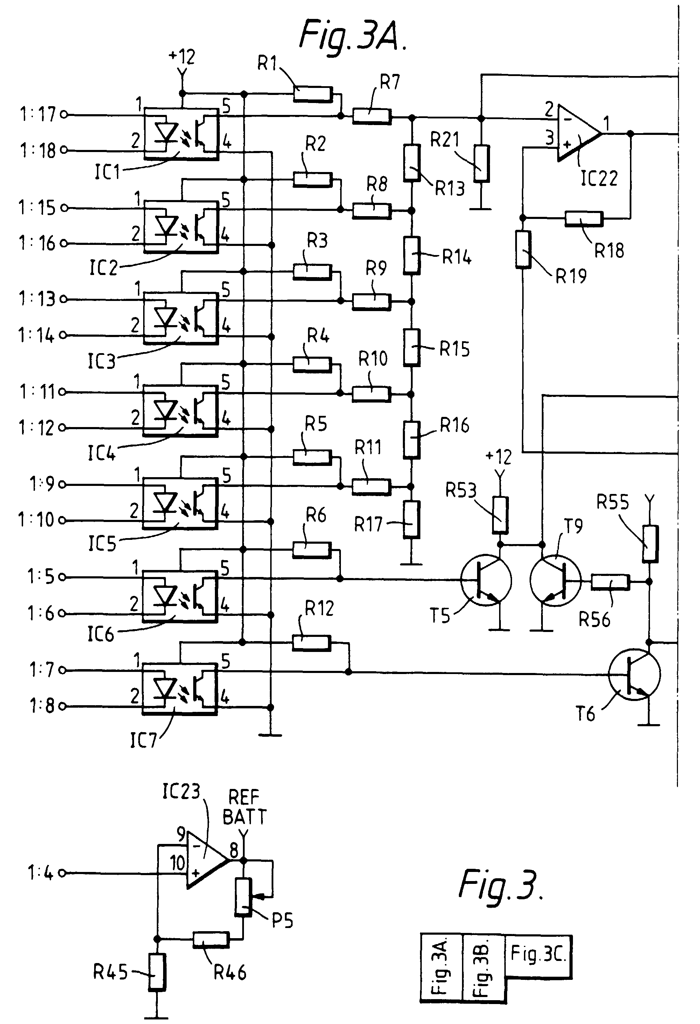

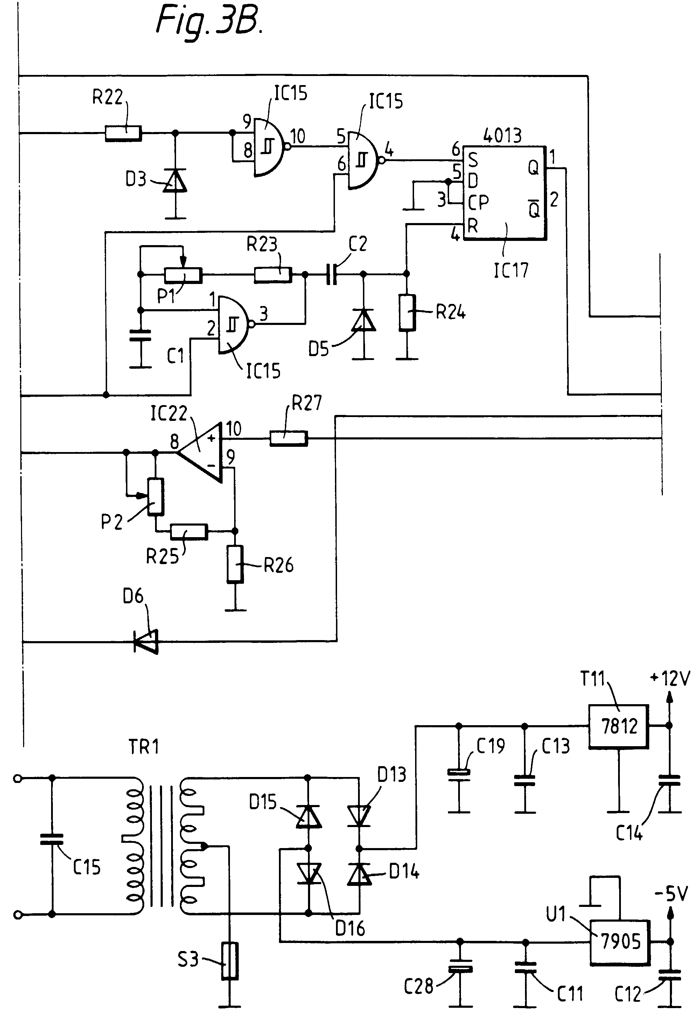

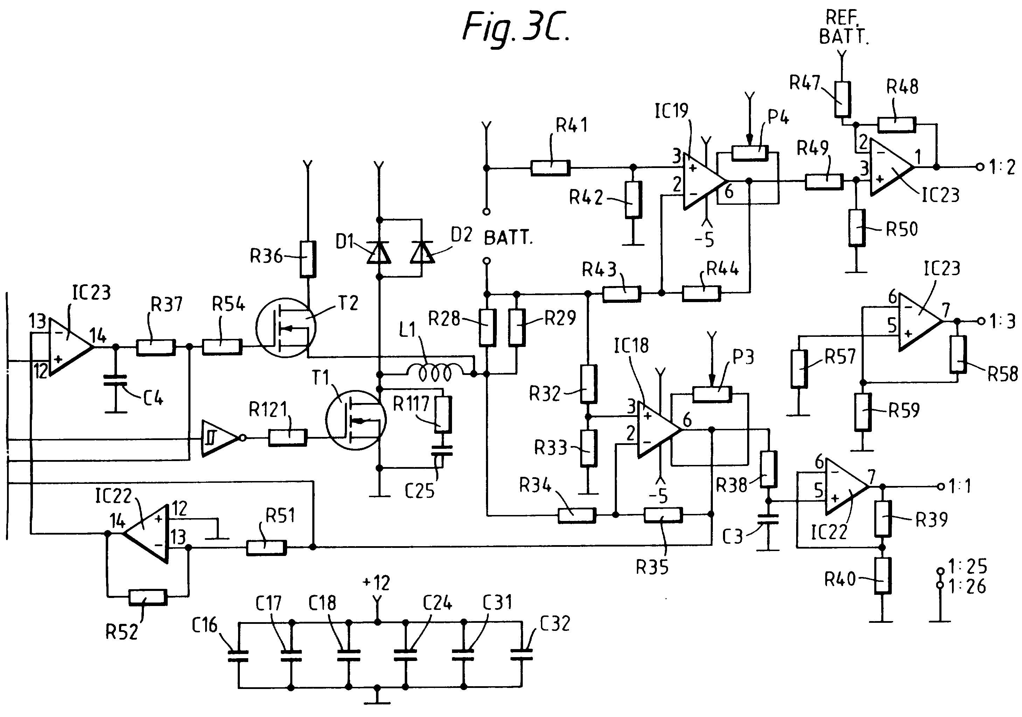

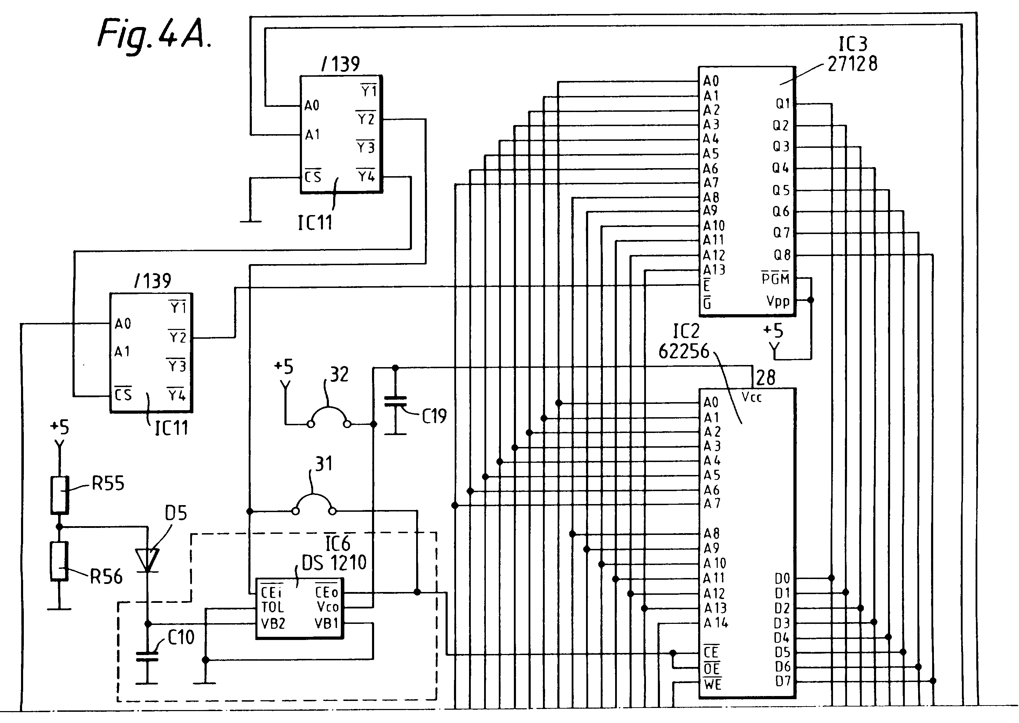

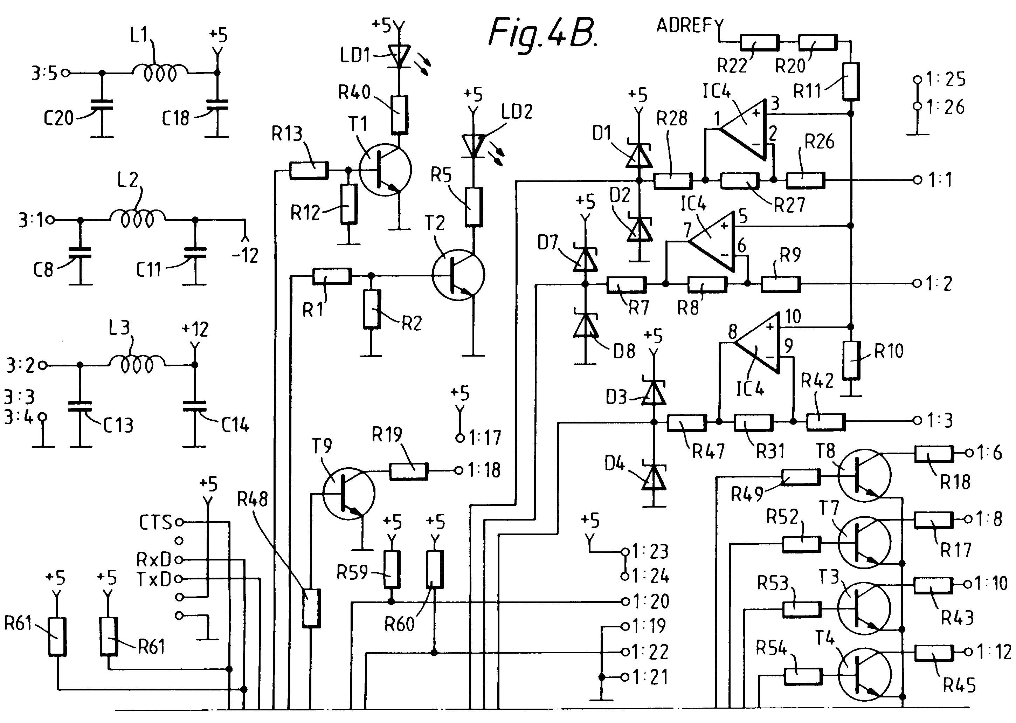

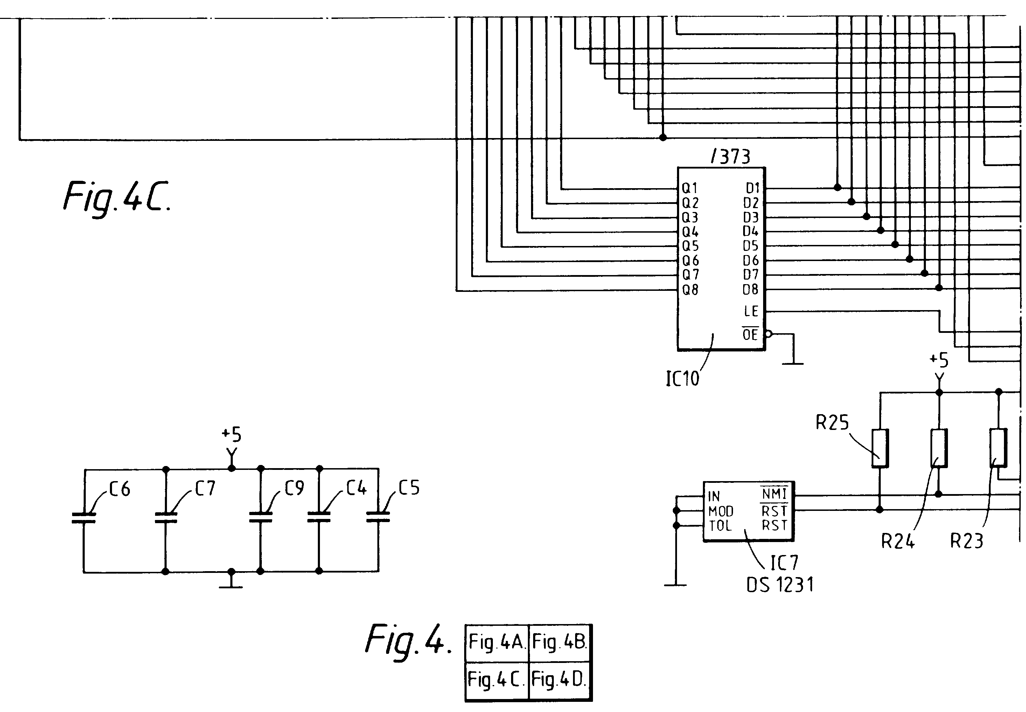

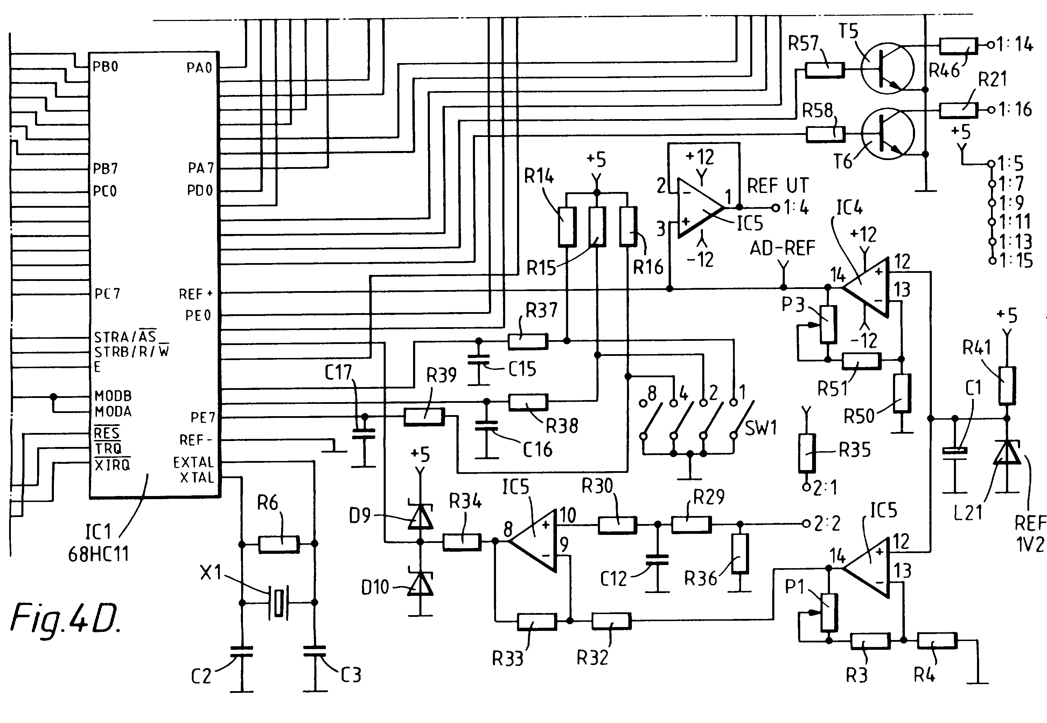

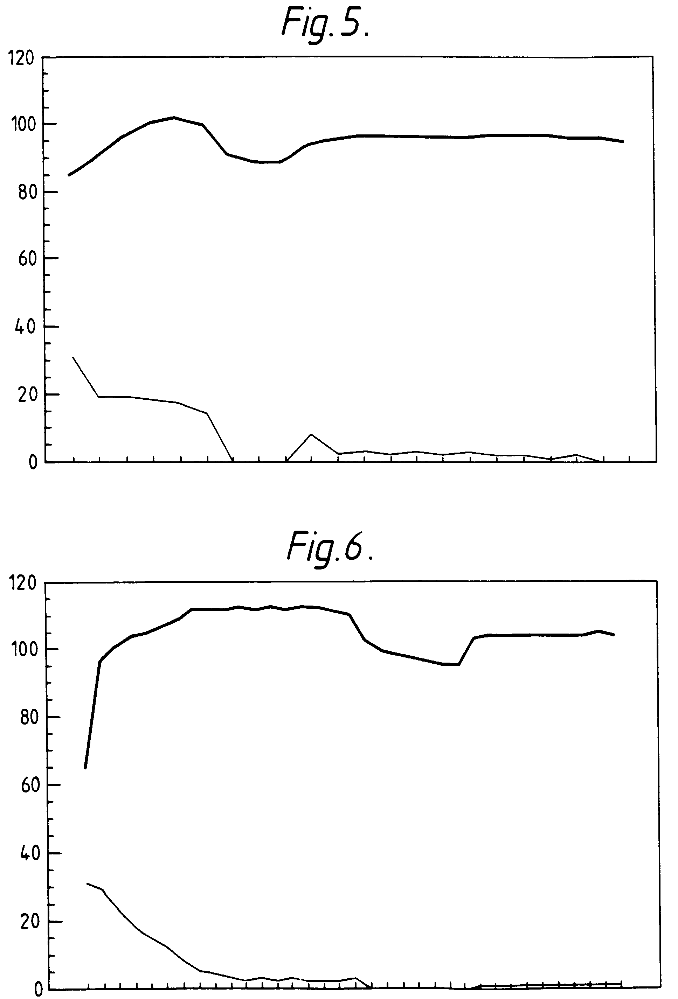

One embodiment of the present invention will be described in greater detail hereinbelow with reference to the accompanying Drawings. In the accompanying Drawings, Figs. 1A-1C show, highly schematically and not to scale, the process in diagram form for illustrating one embodiment of the method according to the present invention. Fig. 2 is a block diagram showing an apparatus for carrying out the method according to the present invention. Fig. 3 is a coupling diagram of a prototype final step for a battery charger according to the present invention. Fig. 4 is a coupling diagram of a prototype CPU unit for a battery charger according to the present invention with a final step according to Fig. 3. Figs. 5-8 are diagrams showing charging of batteries according to the present invention.

The pertinent embodiment of the method according to the present invention will now be illustrated with reference to Figs. 1A-1C. It might, in this instance, be emphasised that the procedural cycles illustrated in these Figures 1A-1C are by no means to scale or exact, serving merely to facilitate an understanding of the method according to the present invention. This will be more obvious to the skilled reader on observation of Figs. 1A-1C in the light of the non-restrictive exemplifying values of voltage, current and time which will be set out in the following discussion.

In the following description, the expression 'rest voltage' is taken to signify the voltage measured across the connecting poles of a battery at a given point in time when no current flows either to or from the battery. The term 'pole voltage' is taken to signify the voltage measured across the connecting poles of the battery at a given point in time when current flows to or from the battery. The abbreviation EMK is taken to signify the rest voltage after a relatively long rest period of more than 10 min. This is also considered as a stable state for the battery.

After coupling-in of a battery which is to be charged and which comprises, for example ten NiCd cells each of 1.2V, connected in series for realising a 12V battery, to a battery charger of the type schematically illustrated in Fig. 2, the apparatus will measure the rest voltage U3 of the battery. As soon as a voltage is impressed upon the battery for driving a current intended for charging of the battery therethrough of, for example, 10A, the pole voltage rises immediately with the value U2 in order thereafter to rise more slowly to the value U1. The voltage increase U2, which may also be designated offset-voltage, in all probability derives substantially from the voltage drop over input conductors and the internal resistance of the battery. Consequently, the voltage U1 can be set at a voltage level which is to be substantially equal to the so-called critical voltage of an NiCd cell of 1.52V or 1.55V at room temperature. At or above this critical voltage, there is a risk of gas formation in the cell and this critical voltage has been established purely chemically. This value should not, however, be considered as an absolute value, since it varies somewhat with the ambient temperature and, thereby, the temperature in the cell proper.

Thus, the voltage value U1 constitutes the critical voltage added with the voltage drop U2 across input conductors and the internal resistance of the battery. In many cases, the voltage drop U2 proves to be approximately 0.1V, for which reason U1 will be approximately 1.62V-1.65V. This voltage value or this pole voltage U1 may not be exceeded after a power energization, as is illustrated in Fig. 1A in that the power energization is broken as soon as the voltage reaches the level U1. After the power de-energization, the voltage falls to a rest voltage U6 which is slightly higher than the rest voltage U3 prior to the time period t1. The voltage for driving the charging current is energized during at most the time period t4 of, for example, ls., while the power break amounts to the time period t2 of, for example, 100 ms. During a certain established time period t1, a number nl of energizations and de-energizations of the voltage take place for driving the charging current through the battery and, at the beginning of each energization, measurement takes place of the rest voltage U6 and the voltage drop U2 for possible adjustment of the voltage value U1. If the time period t4 of, for example, ls., has been exceeded without the voltage level U1 having been reached, the energization is nevertheless discontinued.

If the permitted voltage value U1 is reached very quickly, for example several times within a fraction of 1 min., for example within a few hundred ms, a reduction of the charging current is immediately effected. The charging current is reduced at levels of for example, 32 st or bits, which depends upon the digital construction of the apparatus for carrying out the method according to the invention.

The number of energizations and de-energizations during the time period t1 of 1 min is registered in a register and if a certain number is exceeded, the charging current is reduced, while if the voltage value U1 is not reached during a number of energizations and de-energizations during the time period t1, an increase of the charging current is effected. The smaller the charging current, the greater the number of accepted de-energizations because of the fact that the voltage level U1 is reached. At maximum charging current of 10A, for example 40 energizations and de-energizations are accepted during the time period t1, while up to as many as 150 energizations and de-energizations are accepted when the charging current is small, for example of the order of one or a few amperes, while the number of energizations and de-energizations with maximum time period t4 or longer is only 30 irrespective of the size of the charging current.

After each time period t1, a discharging of the battery takes place in accordance with Fig. 1C, with a discharging current I2 of, for example, 0.150A during a time period t3 of approx. 2 s, whereafter the rest voltage U3 is once again measured and the charging continues in accordance with Fig. 1A.

Thereafter, charging continues in accordance with Fig. 1B until such time as the rest voltage U3 shows a tendency to fall from a maximum value. When U3 has passed its maximum value or the elbow in Fig. 1B, the normal charging cycle is discontinued during a time period t5 of, for example, 15 s, when the rest voltage U7 is measured. After a further time period t6 of 5-10 min, the rest voltage U4 is measured, which is then slightly lower than the rest voltage U7, the difference U5 being calculated between the rest voltage U7, time period t5, after the charge discontinuation, and the rest voltage U4 after time period t6. The voltage level U1 is reduced by this voltage difference U5, whereafter charging continues in the same way as before, until a new elbow occurs in the rest voltage, when the cycle is repeated. This latter charging is considered as a retro-charging in order that as many cells as possible be charged to maximum level without any of the fully charged cells being damaged. Once the voltage difference U5 has become very slight or quite simply zero, merely maintenance charging of the battery takes place, during which the voltage and current values correctly adapt to one another. This maintenance charging continues as long as the battery is connected to the charger.

Figs. 5-8 show examples of charging of different batteries, it being emphasised in this context that the charging is commenced in all cases with a maximum current of 32 bits corresponding to 10A. During the initial phase of the charging, the EMK curve is to be considered as the rest voltage U3, in which event the EMK proper is not obtained until after the charging when the battery has had time to stabilise, for example after 10-60 min.

This method may be realised employing the apparatus illustrated in Fig. 2 which is controlled by means of a microprocessor 1 which may include a CPU unit IC1/68HC11 and a number of additional IC circuits, eg., IC3 which is an EPROM circuit for storing the program proper for executing the above-described method, one example of this being shown in Fig. 4. However, it should be pointed out that the unit is a prototype and embodies a number of functions which may possibly be dispensed with for an efficient battery charging. The microprocessor 1 has a number of current setting outputs leading to a digital/analog converter 2, one output which determines whether charging is to be effected, one output which determines whether discharging is to be effected and two supply inputs for measured current through the battery and measured voltage across the battery. The current is measured by an OP amplifier 3 via a resistor R1, while the voltage is measured by means of an OP amplifier 4. From the converter 2, an analog signal is obtained corresponding to that charging current which it is desired to impress through the battery and which passes to the battery via an OP amplifier 5, an AND gate 6 and a transistor T1. The OP amplifier 5 receives a current feedback via the OP amplifier 3. The AND gate 6 allows the passage of a signal to the transistor T1 on condition that it has received a signal from the OP amplifier 5 and a signal from the AND gate 7 which emits a signal if there is a signal on the charge output from the microprocessor 1 and a response signal to the effect that there is no signal on the discharge output via the inverter 8, whose ouput is high when the discharge output is low. When the AND gate 6 emits a signal to the transistor T1, this becomes conductive and conducts a charging current through the battery, the resistor R1 and an induction coil L, to earth, and the transistor T1 becomes nonconductive, the charging current passes through the battery, the resistor R1, the induction coil L and a diode D1. The induction coil L equilibriates the charging current through the battery.

Discharge of the battery, which takes place after each time period tl of one min, is ordered by the microprocessor 1 whose discharge output will, in such event, be high for back-up voltage of a diode D2 such that the transistor T2 becomes conductive by the output signal from the OP amplifier 10 via a resistor R3. When the transistor T2 becomes conductive, a discharge current is led through the battery via the resistors R1 and R2.

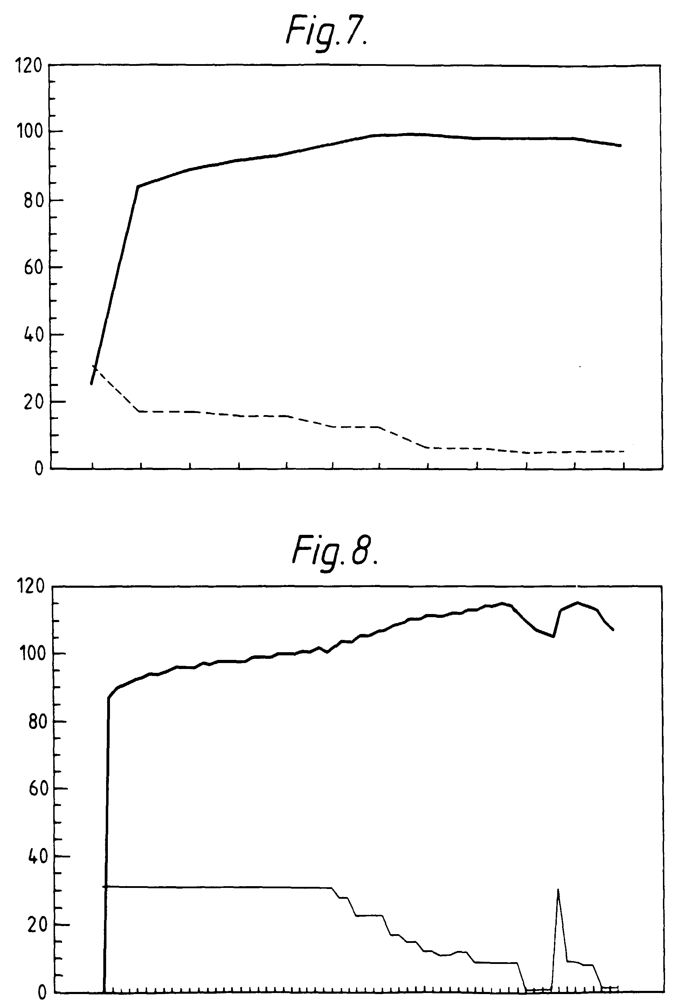

A separate charging voltage source of +24V is connected to the positive pole of the battery. Such a power unit may be of conventional type and should be able to provide a desired current of 10A and even more when large batteries are to be charged, since it appears to be of importance that, in the initial phase of the charging of a battery, the charging current should be large. On charging of batteries of 0.5 Ah in trials using the present invention, the charging current was initially 10 A and was thereafter reduced relatively quickly to a slight level, as is apparent from the charges exemplified in Figs. 6-8. As a result of limitations in the trial apparatus, the charging current in the trial according to Fig. 8 was limited to 10 A.

In the diagrams shown in Figs. 3 and 4, the points denoted by the same reference numerals are interconnected and the voltage inputs, without any direct voltage indication, are coupled to a special mains unit for supply of the charging current. A person skilled in this art is unlikely to find any difficulty whatever in reading the two different diagrams after having studied the present functional description.

In this description, and in Fig. 1, a plurality of different designations U3, U4, U6 and U7 occur for the rest voltage which is the voltage measured at a given point in time across the poles of the battery when no current flows to or from the battery. The rest voltage U3 is measured between the established time periods t1, this immediately before a voltage energization and thereby at the end of M1, in which time period the discharge takes place. The rest voltage U7 is measured after the time period t5 and 15s, and the rest voltage is measured after the time period t6 of 5-10 min, and is subtracted from the rest voltage U7 for obtaining the voltage difference U5. The rest voltage U6 is the rest voltage measured in the time period t1.

## Claims

1. A method for controlling the charging of multi-cell batteries, for example NiCd cells, comprising the steps of:
coupling a battery to a battery charger and impressing a current at a predetermined level through the battery for charging thereof,
measuring the pole voltage of the battery at the commencement of voltage energization for impressing the current through the battery,
establishing the voltage drop across input conductors and interior resistances in the battery,
characterised by the further steps:
establishing the voltage drop in that the measured pole voltage is reduced by the value of the rest voltage which is measured when no current flows through the battery,
establishing a permitted voltage level which substantially corresponds to the voltage prevailing for risk of gas formation in the cells increased by the value of said voltage drop,
selecting said predetermined charging current level of a size that the pole voltage increases to the permitted voltage level,
applying said charging current to the battery at said predetermined level during a first charging cycle of a predetermined time period (t1),
repetitively interrupting said charging current energization, within said first cycle, during a de-energization period of a second predetermined period of time (t2) as soon as the permitted voltage level of the pole voltage has been reached, and
regulating the charging current, during consecutive charging cycles (t1), dependent on the number of energizations and de-energizations during the first charging cycle (t1).

2. The method as claimed in claim 1, **characterised in that** the current through the battery is reduced if said voltage value is exceeded on a number of voltage energizations during the predetermined time period and is increased if said voltage value is shortfallen at a number of voltage energizations during the predetermined time period.

3. The method as claimed in claim 2, **characterised in that** the number of excesses and shortfalls is registered for modifying the current through the battery after a certain number within the predetermined time period; **and that** the current through the battery is reduced after a fewer number of excesses, the larger said current is, and is increased after one and the same number of shortfalls.

4. The method as claimed in claim 3, **characterised in that** the current through the battery is immediately reduced after a number of excesses within the time period for one and the same voltage energization.

5. The method as claimed in claims 2 and 3, **characterised in that** after the established time period, the battery is discharged with a slight discharge current during a certain time period, whereafter the rest voltage of the battery is measured prior to the continued charging.

6. The method as claimed in claim 1, **characterised in that** the charging level of the battery is established in relation to the measured rest voltage which, during the charging, rises to a maximum value and thereafter, during continued charging, once again falls in order duly to stabilise in a desired manner.

7. The method as claimed in claims 1 and 6, **characterised in that** a certain time period after the maximum value of the rest voltage, a current of such size is fed through the battery that the voltage attained on each voltage energization substantially corresponds to the permitted voltage value reduced by the difference between the rest voltage prior to the time period and the rest voltage after the time period.

8. The method as claimed in claim 7, **characterised in that** the charging is continued until such time as the change of the rest voltage becomes negligeable.

9. Apparatus for carrying out the method as claimed in claim 1, comprising
means (1, 4) for measuring the pole voltage across the battery,
means (R1, 1, 3) for measuring the current through the battery,
means (5, 6, T1, L, D1) for impressing a current of a predetermined level to charge the battery, and
means (1) for establishing a voltage drop across input conductors and interior resistances in the battery,
characterised in that the apparatus further comprises:
a CPU card coupled to the means for measuring voltage and current, the card being provided with program memory circuits and other control circuits, for establishing a voltage drop, a permitted voltage level and a charging current level as specified in Claim 1,
a D/A converter (2) coupled between the CPU card and the means (5, 6, T1, L, D1) for impressing said current level, for converting the digital signal established by the CPU card into an analog current level,
means (6, 7, T1) for repetitively supplying and interrupting said charging current to the battery in response to signals from the CPU card detecting that the permitted voltage level has been reached, or that the predetermined periods have lapsed, and
means (1, 2, 3, 5) for regulating the charging current at a value dependent on the number of energizations and de-energizations during the first charging cycle.

## Patentansprüche

1. Verfahren zum Regeln des Aufladens von Mehrzellenbatterien, z.B. NiCd-Zellen, das die folgenden Schritte umfaßt:
Anschließen einer Batterie an ein Batterieladegerät und Aufschalten eines Stromes mit einer vorbestimmten Stärke auf die Batterie zwecks deren Aufladung,
Messen der Polspannung der Batterie zu Beginn einer Spannungserregung zum Aufschalten des Stromes auf die Batterie,
Festlegen des Spannungsabfalls über Eingangsleiter und interne Widerstände in der Batterie,
gekennzeichnet durch die folgenden weiteren Schritte:
Festlegen des Spannungsabfalls dadurch, daß die gemessene Polspannung um den Wert der Ruhespannung reduziert wird, die gemessen wird, wenn kein Strom durch die Batterie fließt,
Festlegen eines zulässigen Spannungsniveaus, das im wesentlichen der auf Grund des Risikos von Gasbildung in den Zellen vorherrschenden Spannung entspricht, erhöht um den Wert des genannten Spannungsabfalls,
Wählen des genannten vorbestimmten Ladestromwertes einer Größe, um die die Polspannung bis zu dem zulässigen Spannungsniveau erhöht wird,
Aufschalten des genannten Ladestromes auf die Batterie mit dem genannten vorbestimmten Wert während eines ersten Ladezyklus einer vorbestimmten Zeitperiode (t1),
wiederholtes Unterbrechen der genannten Ladestromerregung innerhalb des genannten ersten Zyklus während einer Enterregungsperiode einer zweiten vorbestimmten Zeitperiode (t2), sobald der zulässige Spannungswert der Polspannung erreicht ist, und
Regeln des Ladestromes während aufeinanderfolgender Ladezyklen (t1), abhängig von der Anzahl von Erregungen und Enterregungen während des ersten Ladezyklus (t1).

2. Verfahren nach Anspruch 1, dadurch gekennzeichnet, daß der Strom durch die Batterie reduziert wird, wenn der genannte Spannungswert bei einer Anzahl von Spannungserregungen während der vorbestimmten Zeitperiode überschritten wird, und erhöht wird, wenn der genannte Spannungswert bei einer Anzahl von Spannungserregungen während der vorbestimmten Zeitperiode unterschritten wird.

3. Verfahren nach Anspruch 2, dadurch gekennzeichnet, daß die Anzahl von Überschreitungen und Unterschreitungen zum Modifizieren des Stroms durch die Batterie nach einer bestimmten Anzahl innerhalb der vorbestimmten Zeitperiode registriert wird; und daß der Strom durch die Batterie nach einer geringeren Anzahl von Überschreitungen reduziert wird, je größer der genannte Strom ist, und nach derselben Anzahl von Unterschreitungen erhöht wird.

4. Verfahren nach Anspruch 3, dadurch gekennzeichnet, daß der Strom durch die Batterie nach einer Anzahl von Überschreitungen innerhalb der Zeitperiode für dieselbe Spannungserregung sofort reduziert wird.

5. Verfahren nach Ansprüchen 2 und 3, dadurch gekennzeichnet, daß nach der bestimmten Zeitperiode die Batterie mit einem geringen Entladestrom während einer bestimmten Zeitperiode entladen wird, wonach die Ruhespannung der Batterie vor der fortgesetzten Ladung gemessen wird.

6. Verfahren nach Anspruch 1, dadurch gekennzeichnet, daß das Ladeniveau der Batterie in bezug auf die gemessene Ruhespannung festgelegt wird, die während des Ladens auf einen Höchstwert ansteigt und danach während des fortgesetzten Ladens wieder abfällt, um sich sachgemäß auf gewünschte Weise zu stabilisieren.

7. Verfahren nach Ansprüchen 1 und 6, dadurch gekennzeichnet, daß nach Ablauf einer bestimmten Zeitperiode nach dem Höchstwert der Ruhespannung ein Strom einer solchen Größe durch die Batterie gespeist wird, daß die bei jeder Spannungserregung erzielte Spannung im wesentlichen dem zulässigen Spannungswert entspricht, reduziert um die Differenz zwischen der Ruhespannung vor der Zeitperiode und der Ruhespannung nach der Zeitperiode.

8. Verfahren nach Anspruch 7, dadurch gekennzeichnet, daß die Ladung fortgesetzt wird, bis die Änderung der Ruhespannung vernachlässigbar wird.

9. Vorrichtung zur Durchführung des Verfahrens nach Anspruch 1, umfassend
ein Mittel (1, 4) zum Messen der Polspannung über die Batterie,
ein Mittel (R1, 1, 3) zum Messen des Stroms durch die Batterie,
ein Mittel (5, 6, T1, L, D1) zum Aufschalten eines Stroms einer vorbestimmten Stärke zum Laden der Batterie, und
ein Mittel (1) zum Festlegen eines Spannungsabfalls über Eingangsleiter und interne Widerstände in der Batterie,
dadurch gekennzeichnet, daß die Vorrichtung außerdem folgendes umfaßt:
eine Zentralrechnerkarte, die mit dem Mittel zum Messen von Spannung und Strom gekoppelt ist, wobei die Karte mit Programmspeicherschaltungen und anderen Steuerschaltungen ausgestattet ist, um einen Spannungsabfall, ein zulässiges Spannungsniveau und eine Ladestromhöhe gemäß Anspruch 1 zu bestimmen,
einen D/A-Wandler (2), der zwischen die Zentralrechnerkarte und das Mittel (5, 6, T1, L, D1) zum Aufschalten des genannten Stromniveaus geschaltet ist, um das durch die Zentralrechnerkarte erzeugte Digitalsignal in eine analoge Stromstärke umzuwandeln,
ein Mittel (6, 7, T1) zum wiederholten Zuführen und Unterbrechen des genannten Ladestroms zu der Batterie in Reaktion auf Signale von der Zentralrechnerkarte, die ermittelt, daß das zulässige Spannungsniveau erreicht ist, oder daß die vorbestimmten Zeitperioden abgelaufen sind, und
ein Mittel (1, 2, 3, 5) zum Regeln des Ladestroms auf einen Wert abhängig von der Anzahl von Erregungen und Enterregungen während des ersten Ladezyklus.

## Revendications

1. Procédé de contrôle de la charge de batteries multicellulaires, par exemple de cellules NiCd, comprenant les étapes de:
couplage d'une batterie à un chargeur de batterie et application d'un courant à un niveau prédéterminé à la batterie pour la charge de celle-ci,
mesure de la tension polaire de la batterie au début de l'excitation de la tension pour appliquer le courant à la batterie,
détermination de la chute de tension aux conducteurs d'entrée et aux résistances internes de la batterie,
caractérisé par les étapes supplémentaires suivantes:
détermination de la chute de tension en ce que la tension polaire mesurée est réduite de la valeur de la tension au repos qui est mesurée lorsqu'aucun courant ne traverse la batterie,
détermination d'un niveau de tension admise qui corresponde sensiblement à la tension prédominante pour les risques de formation de gaz dans les cellules, augmentée de la valeur de la dite chute de tension,
sélection du dit niveau prédéterminé de courant de charge d'une importance telle que la tension polaire atteigne le niveau de tension admise,
application du dit courant de charge à la batterie au dit niveau prédéterminé durant un premier cycle de charge d'une période prédéterminée (t1),
interruption répétitive de l'excitation du dit courant de charge, durant le dit premier cycle, durant une'période de désexcitation d'une seconde période prédéterminée (t2) dès que le niveau de tension permis de la tension polaire a été atteint, et
régulation du courant de charge, durant des cycles de charge consécutifs (t1), en fonction du nombre d'excitations et de désexcitations durant le premier cycle de charge (t1).

2. Procédé selon la revendication 1, caractérisé en ce que le courant traversant la batterie est réduit si la dite valeur de tension est dépassée pour un certain nombre d'excitations de tension durant la période prédéterminée et qu'il est augmenté si la dite valeur de tension est insuffisante pour un certain nombre d'excitations de tension durant la période prédéterminée.

3. Procédé selon la revendication 2, caractérisé en ce que le nombre de dépassements et d'insuffisances est enregistré pour modifier le courant traversant la batterie après un certain nombre dans la période prédéteminée; et en ce que le courant traversant la batterie est réduit après un nombre plus réduit de dépassements, plus le dit courant est important, et qu'il est augmenté après un seul et même nombre d'insuffisances.

4. Procédé selon la revendication 3, caractérisé en ce que le courant traversant la batterie est immédiatement réduit après un certain nombre de dépassements dans la période d'une seule et même excitation de tension.

5. Procédé selon les revendications 2 et 3, caractérisé en ce que après la période déteminée, la batterie est déchargée avec un léger courant de décharge durant une certaine période, après quoi la tension au repos de la batterie est mesurée avant la poursuite de la charge.

6. Procédé selon la revendication 1, caractérisé en ce que le niveau de charge de la batterie est déterminé par rapport à la tension au repos mesurée qui, durant la charge, atteint une valeur maximale et ensuite, durant la poursuite de la charge, chute encore une fois afin de dûment se stabiliser de la manière souhaitée.

7. Procédé selon les revendications 1 et 6, caractérisé en ce que une certaine période après la valeur maximale de la tension au repos, un courant d'une telle importance est appliqué à travers la batterie que la tension atteinte à chaque excitation de tension corresponde sensiblement à la valeur de tension admise dont est soustraite la différence entre la tension au repos avant la période et la tension au repos après la période.

8. Procédé selon la revendication 7, caractérisé en ce que la charge est poursuivie jusqu'à ce que le changement de la tension au repos devienne négligeable.

9. Appareil destiné à exécuter le procédé revendiqué en revendication 1, comprenant
des moyens (1, 4) de mesure de la tension polaire à travers la batterie,
des moyens (R1, 1, 3) de mesure du courant à travers la batterie,
des moyens (5, 6, T1, L, D1) d'application d'un courant d'un niveau prédéterminé pour charger la batterie, et
des moyens (1) de détermination d'une chute de tension à travers les conducteurs d'entrée et les résistances internes de la batterie,
caractérisé en ce que l'appareil comprenne de plus:
une carte CPU couplée aux moyens de mesure de la tension et du courant, cette carte étant munie de circuits de mémoire programmée et d'autres circuits de commande, afin de déterminer une chute de tension, un niveau de tension admis et un niveau de courant de charge comme il est spécifié en revendication 1,
un convertisseur a-n. (2) couplé entre la carte de CPU et les moyens (5, 6, T1, L, D1) d'application du dit niveau de courant, afin de convertir le signal numérique déterminé par la carte de CPU en un niveau de courant analogique,
des moyens (6, 7, T1) de fournitures et d'interruptions répétitives du dit courant de charge à la batterie en réaction aux signaux de la carte de CPU détectant que le niveau de tension admis a été atteint ou que les périodes prédéteminées se sont écoulées, et
des moyens (1, 2, 3, 5) de régulation du courant de charge à une valeur dépendant du nombre d'excitations et de désexcitations durant le premier cycle de charge.
